# EUROPÄISCHE PATENTSCHRIFT

(11) **EP 3 485 290 B1**
(45) Veröffentlichungstag und Bekanntmachung des Hinweises auf die Patenterteilung: **17.01.2024**
(21) Anmeldenummer: 17722449.0
(22) Anmeldetag: 10.05.2017
(51) Int. Cl.: G01S 13/931, G01S 7/41, G01S 13/536, G01S 13/93, G01S 13/87, G01S 13/58, G01S 13/42, G01S 13/34

(54) **VERFAHREN UND SYSTEM ZUR ABTASTUNG EINES OBJEKTS**
METHOD AND SYSTEM FOR SCANNING AN OBJECT
PROCÉDÉ ET SYSTÈME DE BALAYAGE D'UN PRODUIT

(30) Priorität: 15.07.2016 DE 102016213007
(43) Veröffentlichungstag der Anmeldung: 22.05.2019
(73) Patentinhaber: Robert Bosch GmbH, 70442 Stuttgart (DE)
(72) Erfinder: SCHLOSSER, Markus, 76137 Karlsruhe (DE); BUDDENDICK, Hermann, 71067 Sindelfingen (DE)
(86) Internationale Anmeldenummer: PCT/EP2017/061115
(87) Internationale Veröffentlichungsnummer: WO 2018/010866

(56) Entgegenhaltungen:
- EP-A1- 2 806 287
- DE-A1-102004 047 086
- DE-A1-102011 121 560
- DE-A1-102013 018 752
- DE-A1-102014 009 651
- DE-A1-102014 118 031
- DE-A1-102015 109 759

## Beschreibung

Die Erfindung betrifft die Abtastung eines Objekts mittels Radar-Signalen.

Insbesondere betrifft die Erfindung die genauere Bestimmung eines Objekts im Umfeld eines Kraftfahrzeugs.

### Stand der Technik

Ein Radarsystem ist dazu eingerichtet, ein Radarsignal auszusenden und das an einem Objekt reflektierte Radarsignal mit dem ausgesandten Radarsignal zu vergleichen. Dabei sind zahlreiche verschiedene Spielarten bekannt, mittels derer unterschiedliche Informationen über das Objekt gesammelt werden können. Eine bekannte Variante ist das FMCW (Frequency Modulated Continuous Wave) Radar, bei dem das ausgesandte Radarsignal mit einer Sägezahnfunktion moduliert wird. Ein Abstand des Objekts vom Radarsystem kann dann mit guter Genauigkeit bestimmt werden. Ein Objektwinkel, der angibt, in welcher Richtung vom Radarsensor aus das Objekt zu finden ist, kann durch Verwendung mehrerer Antennen oder Steuerung einer Antenne so, dass die Signale in vorbestimmten Richtungen abgestrahlt werden, erzielt werden.

Eine Doppler-Verschiebung des reflektierten gegenüber dem ausgesandten Radarsignal kann auf eine Relativgeschwindigkeit des Objekts gegenüber dem Radarsystem hinweisen. Ein Objekt, das sich in sich bewegt, beispielsweise ein Fußgänger, dessen Arme und Beine hin und her schwingen, zeigt charakteristische, häufig periodische Schwankungen der messbaren Dopplerfrequenzen. Frequenzen der Schwankungen können analysiert werden, um das Objekt näher klassifizieren zu können.

DE 10 2015 109 759 A1 schlägt vor, ein Radarsystem an Bord eines Kraftfahrzeugs derart zu steuern, dass eine Mikrodoppleranalyse durchgeführt werden kann.

DE 10 2004 047 086 A1 offenbart einen Radarsensor für Kraftfahrzeuge.

DE 10 2014 118 031 A1 offenbart einen Radarsensor, ein Radarsensor-System sowie ein Verfahren zur Bestimmung der Position eines Objekts mit horizontaler und vertikaler digitaler Strahlformung zur Vermessung von punkt- und flächenförmig reflektierenden Objekten.

DE 10 2014 009 651 A1 offenbart ein Verfahren und eine Vorrichtung zum Erfassen der Umgebung auf der Grundlage von Erfassungssignalen von frequenzmoduliertem Dauerstrichradar und Dauerstrichradar.

EP 2 806 287 A1 offenbart eine Objekt-Detetektionsvorrichtung.

DE 10 2011 121 560 A1 offenbart ein Verfahren zur Detektion und Klassifikation von Objekten.

DE 10 2013 018 752 A1 offenbart ein Verfahren zur Klassifikation von Fußgängern.

Zur Klassifikation eines Objekts mittels eines Radarsystems, das selbst beweglich ist, beispielsweise an Bord eines Kraftfahrzeugs, kann eine komplexe Modulation, beispielsweise mit Chirp-Sequenzen, verwendet werden. Eine Verarbeitung kann hierbei jedoch sehr aufwändig sein. Beispielsweise kann eine zweidimensionale Fourier-Analyse des Differenzsignals zwischen Sende- und Empfangssignal erforderlich sein, sodass eine leistungsfähige Verarbeitungseinrichtung unabdingbar ist.

Eine der vorliegenden Erfindung zu Grunde liegende Aufgabe besteht darin, eine einfache Technik zur Abtastung eines Objekts von einem Kraftfahrzeug aus anzugeben. Die Erfindung löst diese Aufgabe mittels der Gegenstände der unabhängigen Ansprüche. Unteransprüche geben bevorzugte Ausführungsformen wieder.

### Offenbarung der Erfindung

Ein System zur Abtastung eines Objekts von einem Kraftfahrzeug aus umfasst eine erste Radarvorrichtung zur Abtastung erster Informationen des Objekts, die eine Entfernung, einen ersten Objektwinkel und eine erste Relativgeschwindigkeit umfassen; eine Dauerstrich-Radarvorrichtung zur Abtastung zweiter Informationen des Objekts, die eine zweite Relativgeschwindigkeit und einen zweiten Objektwinkel umfassen; und eine Verarbeitungseinrichtung zur Zuordnung der ersten und zweiten Informationen bezüglich des selben Objekts, und zur Klassifikation des Objekts auf der Basis einer Charakteristik der zweiten Relativgeschwindigkeit.

Die Klassifikation kann insbesondere einen Vergleich der Charakteristik der zweiten Relativgeschwindigkeit mit einer vorbestimmten Charakteristik umfassen. Die Charakteristik kann auf ein Bewegungsmuster des Objekts hinweisen. Die Charakteristik kann ein Spektrum unterschiedlicher Relativgeschwindigkeiten oder eine zeitliche Änderung des Spektrums umfassen, sodass ein Objekt, das an unterschiedlichen Stellen unterschiedliche Relativgeschwindigkeiten zur zweiten Radarvorrichtung aufweist, verbessert bestimmt werden kann. In einer besonders bevorzugten Ausführungsform kann bestimmt werden, ob es sich bei dem Objekt um einen Fußgänger handelt. Der Fugßgänger ist dabei in Bewegung und unterschiedliche Körperteile bewegen sich unterschiedlich schnell bezüglich der Radarvorrichtungen. Eine Geschwindigkeitsverteilung des Objekts über die Zeit kann charakteristisch für einen Fußgänger sein.

Der Erfindung liegt der Gedanke zu Grunde, ein Spektrum von Relativgeschwindigkeiten mittels der (zweiten) Dauerstrich-Radarvorrichtung zu bestimmen und diese Informationen mit einzelnen Objekten zu korrelieren, die mittels der ersten Radarvorrichtung abgetastet werden. So kann eine genaue Analyse einzelner Objekte auch in komplexen Szenarien mit mehreren Objekten in unterschiedlichen Abständen oder mit unterschiedlichen Geschwindigkeiten gelingen.

Das System kann eine Kombination der Vorteile unterschiedlicher Radarvorrichtungen erlauben, um sowohl genaue Informationen über die Art einer Bewegung des Objekts als auch genaue Informationen über den Ort und die Änderung des Orts des Objekts zu analysieren. Insbesondere kann die Analyse genauer Geschwindigkeitsinformationen des Objekts auch dann gelingen, wenn sich das Kraftfahrzeug mit den Radarvorrichtungen gegenüber der Umgebung bewegt.

Die Klassifikation des Objekts kann so deutlich verbessert sein. Insbesondere die Bestimmung eines Objekts als Fußgänger kann verbessert durchgeführt werden, sodass beispielsweise ein Fahrassistent, eine aktive oder eine passive Unfallschutzvorrichtung an Bord des Kraftfahrzeugs verbessert gesteuert werden können. Wird etwa bestimmt, dass sich der Fußgänger auf Kollisionskurs mit dem Kraftfahrzeug befindet, so kann ein Signal zur Warnung eines Fahrers oder des Fußgängers ausgegeben werden. In einer weiteren Ausführungsform kann auch eine automatische Bremsung ausgelöst werden.

Die erste Radarvorrichtung verwendet erfindungsgemäß das FMCW-Verfahren (frequency modulated continuous wave: frequenzmoduliertes Dauerstrichradar), das üblicherweise Frequenzrampen eines kontinuierlichen Radarsignals verwendet. Andere Ausführungsformen sind ebenfalls möglich, aber nicht Teil der Erfindung, beispielsweise kann eine Radarvorrichtung verwendet werden, bei der zur Bestimmung des Objektwinkels die einzelnen Raumwinkel nacheinander mechanisch oder elektronisch abgetastet werden. Unabhängig vom verwendeten Modulationsverfahren würde sich bei dieser räumlichen Abtastung ansonsten die Messdauer für jeden einzelnen abgetasteten Raumwinkel entsprechend der gewünschten Geschwindigkeitsauflösung verlängern.

Die Verarbeitungseinrichtung ist erfindungsgemäß dazu eingerichtet, eine Mikrodoppleranalyse der Signale der Dauerstrich-Radarvorrichtung durchzuführen. Durch die Mikrodoppleranalyse kann verbessert bestimmt werden, ob ein Bewegungsmuster eines Objekts mit einem bekannten Bewegungsmuster eines Fußgängers übereinstimmt. Es kann sogar bestimmt werden, welcher Aktivität der Fußgänger nachgeht.

Signale einzelner FMCW-Rampen der ersten Radarvorrichtung werden bevorzugt getrennt voneinander verarbeitet. Dazu werden die FMCW-Rampen bevorzugt mittels einer bekannten, eindimensionalen Fourier-Transformation analysiert. Dies kann deutlich weniger rechenaufwändig als die zweidimensionale Fourier-Analyse bei Chirp-Sequenzen sein. Zur Trennung der verschiedenen Objekte können nach der Fourieranalyse die detektierten Frequenzpeaks über unterschiedliche Rampen hinweg miteinander kombiniert werden.

Die beiden Radarvorrichtungen werden weiter erfindungsgemäß abwechselnd betrieben. Dadurch können Abtastungen im gleichen Frequenzbereich leichter durchgeführt werden.

Die beiden Radarvorrichtungen können in einer integriert sein, wobei die integrierte Radarvorrichtung nacheinander mit unterschiedlichen Signalen betrieben wird. Zu einem Zeitpunkt kann sie beispielsweise entweder mit einem FMCW- oder einem Dauerstrich-Signal betrieben werden. Insbesondere können die Betriebsarten abwechselnd aktiviert werden. Durch Einsparen einer Radarvorrichtung können Kosten eingespart werden. Eine bekannte Radarvorrichtung kann mit überschaubarem Aufwand zum beschriebenen System ausgebaut werden.

Der Dauerstrichbetrieb ist erfindungsgemäß länger als eine Frequenzrampe des FMCW-Betriebs. Der Dauerstrichbetrieb kann beispielsweise über eine Periode von ca. 15 - 25 ms, in anderen Varianten ca. 10 - 15 ms oder 25 bis 30 ms, betrieben werden. Die Genauigkeit der Geschwindigkeitsbestimmung mittels Dopplerfrequenz kann dadurch signifikant gesteigert sein.

Erfindungsgemäß wird ein Differenzsignal zwischen dem ausgesandten und dem am Objekt reflektierten Dauerstrich-Radarsignal bezüglich seiner Frequenzverteilung analysiert. Die Analyse wird erfindungsgemäß mittels Fourier-Transformation durchgeführt. Dabei können die Signalenergien in vorbestimmten Frequenzbereichen errechnet werden. Die Frequenzverteilung wird erfindungsgemäß in ihrem zeitlichen Verlauf analysiert, sodass beispielsweise ein Bewegungsmuster eines gehenden oder laufenden Fußgängers verbessert erkannt werden kann.

Es werden erfindungsgemäß nur solche Frequenzen betrachtet, die unterhalb einer vorbestimmten Grenzfrequenz liegen, wobei die Grenzfrequenz auf der Basis der Geschwindigkeit der Radarvorrichtungen gegenüber der Umgebung bestimmt ist. Dadurch werden erfindungsgemäß nur Signalanteile betrachtet, die Objekten zugeordnet sind, die schneller auf die Radarvorrichtung zukommen als sich die Radarvorrichtung gegenüber der Umgebung bewegt, also Objekten, die sich selbst gegenüber der Umgebung bewegen. Die Dopplerfrequenz dieser Objekte ist entsprechend kleiner (bzw. betragsmäßig größer) als diejenige Dopplerfrequenz, die der negativen Eigengeschwindigkeit entspricht. Zusätzlich sollten diese Signalanteile auch über einem Rauschpegel liegen.

Ein Verfahren zum Abtasten eines Objekts von einem Kraftfahrzeug aus umfasst Schritte des Abtastens erster Informationen des Objekts mittels einer FMCW-Radarabtastung, wobei die ersten Informationen eine Entfernung, einen ersten Objektwinkel und eine erste Relativgeschwindigkeit umfassen; des Abtastens zweiter Informationen des Objekts mittels einer Dauerstrich-Radarabtastung, wobei die zweiten Informationen eine zweite Relativgeschwindigkeit und einen zweiten Objektwinkel umfassen; des Zuordnens der ersten und zweiten Informationen bezüglich des selben Objekts; und des Bestimmens, dass das Objekt einen Fußgänger umfasst, falls eine zeitliche Änderung der zweiten Relativgeschwindigkeit des Objekts auf ein vorbestimmtes Bewegungsmuster des Objekts hinweist.

Merkmale oder Ausführungsformen des Verfahrens und des Systems korrespondieren zueinander, sodass sie zwischen den beiden Kategorien übertragen bzw. ausgetauscht werden können.

### Kurze Beschreibung der Figuren

Die Erfindung wird nun mit Bezug auf die beigefügten Figuren genauer beschrieben, in denen:
- Fig. 1: ein System;
- Fig. 2: ein Ablaufdiagramm eines Verfahrens; und
- Fig. 3: ein beispielhaftes Signal
darstellt.

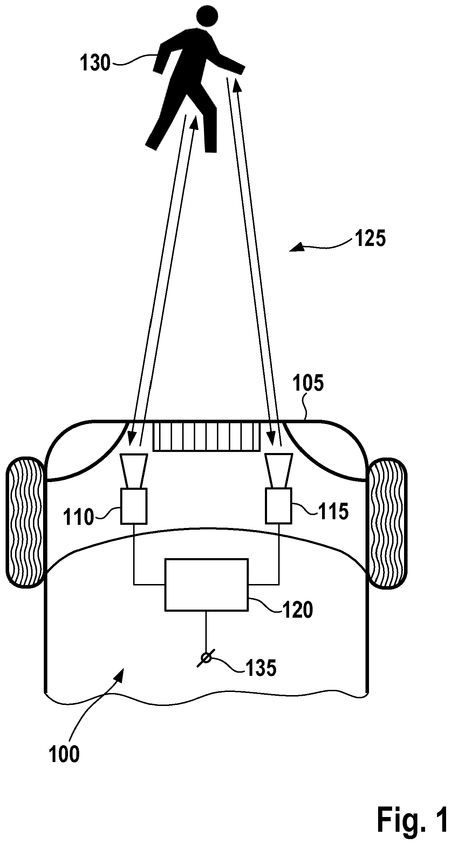

Figur 1 zeigt ein System 100, das ein Kraftfahrzeug 105, eine erste Radarvorrichtung 110, eine zweite Radarvorrichtung 115 und eine Verarbeitungseinrichtung 120 umfasst. Die beiden Radarvorrichtungen 115, 120 können auch integriert als eine Radarvorrichtung 115, 120 ausgebildet sein, in diesem Fall ist ein abwechselnder Betrieb als erste Radarvorrichtung 115 und zweite Radarvorrichtung 120 bevorzugt. Die Radarvorrichtungen 115, 120 und die Verarbeitungseinrichtung 120 sind an Bord des Kraftfahrzeugs 105 angebracht, das sich gegenüber einer Umgebung 125 bewegen kann. In der Umgebung 125 befindet sich ein Objekt 130, das hier durch einen Fußgänger repräsentiert ist. Es ist Aufgabe des Systems 100, das Objekt 130 mittels Radarsignalen abzutasten und Orts-, Bewegungs- und Klassifikationsinformationen des Objekts 130 zu bestimmen. Die bestimmten Informationen können mittels einer Schnittstelle 135 bereitgestellt werden. Die Schnittstelle 135 kann mit einer Warn- oder Steuereinrichtung an Bord des Kraftfahrzeugs 105 verbunden werden.

Das Objekt 130 kann sich ebenfalls gegenüber der Umgebung 125 bewegen. Außerdem kann sich das Objekt 130 in sich bewegen oder Mikrobewegungen zeigen. Dabei können sich Teile des Objekts 130 mit einer anderen Geschwindigkeit bewegen als das Objekt 130 bezüglich der Umgebung 135. In diesem Fall kann mit der Radaravorrichtung 115, 120 nicht nur eine Doppler-Frequenz, sondern eine ganze Spanne an Doppler-Frequenzen gemessen werden.

Beispielsweise kann sich der Fußgänger 130 mit einer Geschwindigkeit von 5 km/h bezüglich der Umgebung 135 bewegen. Aufgrund der periodischen Bewegung der Beine (und meist auch Arme) Fußgängers 130 schwankt auch seine Dopplerfrequenz-Aufspreizung periodisch. Wenn beide Füße auf dem Boden stehen, ist die maximale Geschwindigkeit durch den Torso gegeben. Entlang der Beine reduziert sich diese Geschwindigkeit bis auf null bei den Füßen. Daher sind potentiell jegliche Doppler-Frequenzen messbar, die Geschwindigkeiten zwischen null und der Geschwindigkeit des Torsos entsprechen. Dies ist auch der Zeitpunkt der geringsten Dopplerfrequenz-Aufspreizung. Beim nach vorne Schwingen erreicht ein Fuß hingegen bis zum 3-4 Fachen der Torso-Geschwindigkeit.

Um das Spektrum der Geschwindigkeiten des Objekts 130 genau genug zu bestimmen, ohne eine komplexe Modulation und eine komplexe Auswertung der Radarsignale zu erfordern, wird vorgeschlagen, einen Ort und/oder eine grobe Bewegung des Objekts 130 mittels der ersten Radarvorrichtung 115 zu bestimmen, die ein übliches FMCW-Signal verwendet. Zusätzlich werden Mikrobewegungen des Objekts 130 mittels der zweiten Radarvorrichtung 120 bestimmt und analysiert, vorzugsweise mittels Mikrodoppleranalyse. Die zweite Radarvorrichtung verwendet dabei bevorzugt ein Dauerstrichsignal, moduliert das ausgesandte Radarsignal also nicht über die Zeit. Die Bestimmung mittels des Dauerstrichsignals kann länger durchgeführt werden als eine übliche Rampe des FMCW-Verfahrens dauert, beispielsweise ca. 20 ms, um eine ausreichende Geschwindigkeitsauflösung zu erzielen.

Für das Dauerstrichsignal hat nur der Doppler-Effekt einen Einfluss auf das Empfangssignal. Die Entfernung des Objekts 130 hingegen spielt keine Rolle. Die Differenz- und damit Doppler-Frequenz entspricht direkt einer physikalischen Geschwindigkeit des Objekts 130 gegenüber dem Kraftfahrzeug 105. Da für das Dauerstrich-Signal keine Distanz bestimmt werden kann, muss die Trennung der Szene in die einzelnen Objekte 130 weiterhin durch das klassische FMCW-Verfahren erfolgen. Beide Radarvorrichtungen 130 können jedoch die Geschwindigkeit und den Winkel des Objekts 130 gegenüber den Radarvorrichtungen 110, 115 bestimmen, sodass es meist möglich ist, den Mikrodoppler-Effekt eindeutig einem der detektierten Objekte 130 zuzuordnen.

Leider lässt sich ein Fußgänger 130 aufgrund seiner geringen Geschwindigkeit nur schwer von einem stehenden Objekt 130 unterscheiden. Die Zuordnung eines gemessenen Mikrodoppler-Effektes zu einem der potentiell als bewegt erkannten Objekte 130 ist daher hauptsächlich über die Winkelinformation und insbesondere über den Vergleich zwischen dem zeitlichen Verlauf des Mikrodoppler-Winkels und dem zeitlichen Verlauf der Objektwinkel möglich. Selbst für bewegte Starrkörper, die keinen Mikrodoppler aufweisen, ermöglicht die hohe Geschwindigkeitsauflösung des Dauerstrichsignals eine Verfeinerung der ursprünglichen Geschwindigkeitsschätzung rein basierend auf den FMCW-Rampen. In diesem Fall ist die Zuordnung über die Geschwindigkeit besonders einfach, da sich die vergleichsweise wenigen in der Szene vorhandenen Objekte üblicherweise signifikant in ihren Geschwindigkeiten unterscheiden.

Schließlich kann das Dauerstrichsignal quasi vollständig getrennt von den klassischen FMCW-Rampen analysiert werden. Durch die Erweiterung sind damit nur minimale Änderungen an der Verarbeitung einer bekannten Radarvorrichtung notwendig, um das System 100 zu bilden.

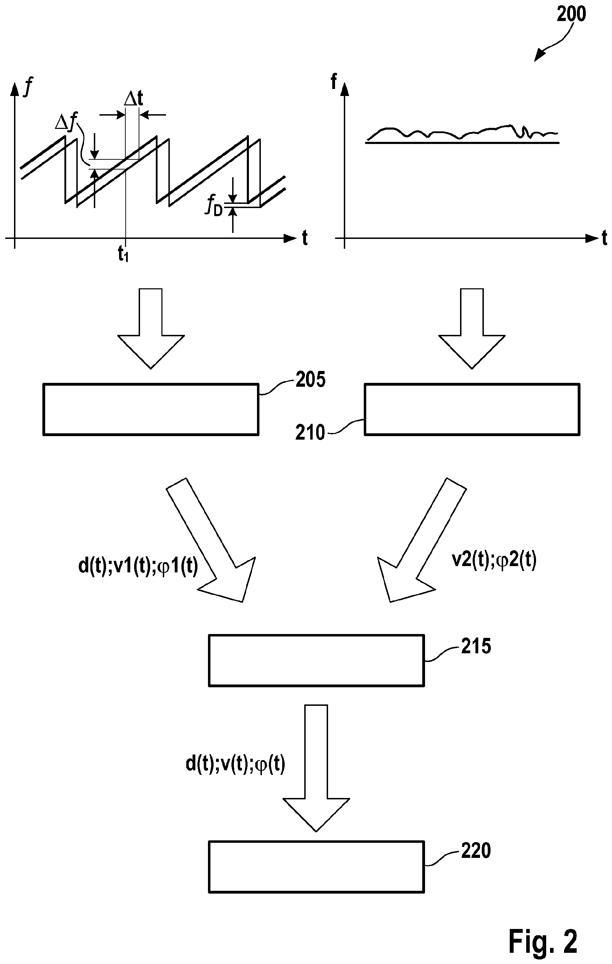

Figur 2 zeigt ein Ablaufdiagramm 200 eines Verfahrens zum Bestimmen von Informationen über ein Objekt 130, wobei die Informationen insbesondere einen Ort oder eine Bewegung des Objekts 130 und eine Verteilung von Frequenzen von Mikrobewegungen umfassen soll.

In einem Schritt 205 wird das Objekt 130 mittels der ersten Radarvorrichtung 110 bevorzugt auf der Basis eines FMCW-Signals abgetastet. Andere Radar-Verfahren sind alternativ auch möglich. Das ausgesandte und das reflektierte Signal sind qualitativ über dem Schritt 205 in einem Zeitdiagramm angedeutet. Diese Bestimmung ist in der Radartechnik wohlbekannt und kann auf eine beliebige bekannte Art durchgeführt werden. Als Ergebnisse der Abtastung werden bevorzugt ein erster Abstand d(t), eine erste Geschwindigkeit v1 (t) und ein erster Winkel ϕ1(t) bestimmt.

In einem Schritt 210, der abwechselnd mit dem Schritt 205 durchgeführt werden kann, wird das Objekt 130 mittels der zweiten Radarvorrichtung 115 auf der Basis eines Radarsignals mit gleichbleibender Frequenz (Dauerstrich-Signal) abgetastet. Das über dem Schritt 210 angedeutete Diagramm skizziert das ausgesandte und das reflektierte Signal. Als Ergebnisse der Abtastung werden bevorzugt eine zweite Geschwindigkeit v2(t) und ein zweiter Winkel ϕ2(t) bestimmt. Die zweite Geschwindigkeit ist dabei bevorzugt sehr hoch aufgelöst und erlaubt eine Mikrodoppleranalyse (MDA).

In einem Schritt 215 werden die in den Schritten 205 und 210 bestimmten Informationen einander zugeordnet. Erste Informationen und zweite Informationen, die jeweils gleiche Winkel und weiter bevorzugt gleiche zeitliche Entwicklungen ihrer Winkel umfassen, beziehen sich auf dasselbe Objekt 130 und können einander zugeordnet werden. Der Schritt 215 stellt als Kombination der ersten und zweiten Informationen bevorzugt eine Entfernung d(t), eine Geschwindigkeit v(t) und einen Winkel ϕ(t) bereit.

In einem Schritt 220 kann die Frequenzverteilung der zweiten Geschwindigkeiten analysiert werden, um zu bestimmen, ob das sich ergebende Muster auf einen Fußgänger hinweist. Entsprechende Muster oder Charakteristika solcher Muster können vorbestimmt sein. Anschließend kann das Ergebnis der Bestimmungen ausgegeben werden.

### Signalverarbeitung

Die Verarbeitung des Dauerstrichsignals der zweiten Radarvorrichtung 110 ist derjenigen von FMCW-Rampen, beispielsweise der ersten Radarvorrichtung 110, grundsätzlich gleich. Einer nicht-kohärenten Integration über alle Empfangskanäle folgt eine Spektralanalyse mittels Fourier-Transformation. Dabei wird das Signal in Frequenzen zerlegt, aus denen es sich zusammensetzt. Dann wird die Leistung der Frequenzkomponenten in jedem Frequenzbin bestimmt.

Im Gegensatz zu FMCW-Rampen müssen hier jedoch keine Frequenzpeaks detektiert (und einander zugeordnet) werden. Jeder Frequenzbin mit einer Leistung über der Rauschschwelle zeigt direkt das Vorhandensein eines physikalischen Objekts 130 mit der entsprechenden Geschwindigkeit (in radialer Richtung) an. Für ein Objekt 130 mit Mikrodoppler-Effekt ist dies natürlich sogar für ein ganzes Frequenzspektrum ergeben. Auch die Winkelschätzung ist praktisch die gleiche wie bei FMCW-Rampen. Es entfällt wiederum lediglich die Detektion einzelner Frequenzpeaks. Darüber hinaus gibt es nur ein einziges Dauerstrichsignal, für das ein Winkel bestimmt werden kann, so dass auch die Berechnung eines Winkels pro Rampe entfällt. An die Stelle der verschiedenen Rampen treten jedoch bei vorhandenem Mikrodoppler die einzelnen Frequenzbins.

### Physikalische Betrachtungen zum Auswertebereich

Wie bereits angedeutet, erschwert im Automobilbereich die Eigenbewegung der zweiten Radarvorrichtung 115 die Mikrodoppler-Analyse eines Fußgängers 130. Für eine bewegte Radarvorrichtung 115 sieht es so aus, als würde sich ein stehendes Objekt 130 direkt voraus mit ihrer eigenen Geschwindigkeit auf sie zubewegen. Bei einem seitlichen Versatz reduziert sich diese scheinbare Geschwindigkeit um den Cosinus des Beobachtungswinkels. Im Moment der Vorbeifahrt (d.h. bei 90°) scheint das Objekt 130 kurz zum Stehen zu kommen, bevor es sich nach hinten von der zweiten Radarvorrichtung 115 entfernt. Die reflektierte Leistung des stehenden Objekts 130 beschränkt sich daher im Spektrum auf diejenigen Frequenzen, die den Geschwindigkeiten zwischen null und der negativen Ego-Geschwindigkeit entsprechen. Als Ego-Geschwindigkeit wird die Geschwindigkeit des Kraftfahrzeugs 105 gegenüber der Umgebung 125 bezeichnet.

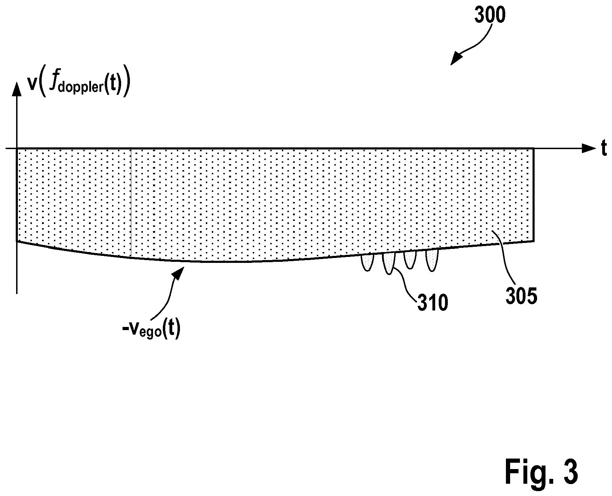

Dieser Zusammenhang ist in Figur 3 in einem Diagramm 300 gezeigt. In horizontaler Richtung ist eine Zeit und in vertikaler Richtung eine Geschwindigkeit nach Dopplerfrequenz angetragen. Ein Grundsignal 305 repräsentiert Objekte 130, die sich mit einer geringeren als der negativen Ego-Geschwindigkeit relativ zur zweiten Radarvorrichtung 115 bewegen und somit als stationär anzusehen sind. Einzelne Spitzen (peaks) 310 korrespondieren zu Objekten 130, die sich wie Fußgänger 130 bewegen.

Alle anderen Frequenzen außerhalb dieses Bereichs werden durch ein stationäres Objekt 130 nicht gestört. Im Gegensatz dazu verteilt sich in den anderen FMCW-Rampen der Hintergrund-Clutter über einen deutlich größeren Frequenzbereich.

Für den Fußgängerschutz im Bereich der Fahrerassistenz sind querende Fußgänger 130 besonders relevant. Im Vergleich zu frontal entgegenkommenden Fußgängern 130 ist die Radialkomponente ihrer Bewegung in Richtung der zweiten Radarvorrichtung 115 zwar deutlich reduziert, aber nicht null. Selbst wenn der Fußgänger 130 eine Straße, auf der sich das Kraftfahrzeug 105 bewegt, senkrecht überquert, bewegt er sich nicht senkrecht zur zweiten Radarvorrichtung 115. Dennoch ist für einen querenden Fußgänger 130 typischerweise nur die Relativgeschwindigkeit des nach vorne schwingenden Beines höher als diejenige eines stehenden Objekts 130 direkt in Fahrtrichtung voraus. Nur die entsprechenden Frequenzanteile sind daher auch störungsfrei spektral zu analysieren. Durch die langsame, aber aktive Bewegung des Fußgängers 130 in Richtung der zweiten Radarvorrichtung 115 fällt der zu analysierende Mikrodoppler-Effekt in den Frequenzbereich direkt unterhalb der der negativen Ego-Geschwindigkeit entsprechenden Doppler-Frequenz. Für die Ego-Geschwindigkeit existiert an Bord des Kraftfahrzeugs 105 üblicherweise eine Schätzung von hoher Qualität. Der für Fußgänger 130 relevante Bereich im Frequenzspektrum lässt sich daher direkt auswählen.

In Kurven weisen aufgrund der Rotationsbewegung einzelne Punkte des Kraftfahrzeugs 105 unterschiedliche Geschwindigkeiten auf. Die Ego-Geschwindigkeit des Kraftfahrzeugs 105 wird üblicherweise bezüglich einer Fahrzeughinterachse bestimmt. Durch eine üblicherweise ebenfalls bekannte Gierrate des Kraftfahrzeugs 105 lässt sich daraus einfach die entsprechende Geschwindigkeit einer vorne verbauten zweiten Radarvorrichtung 115 ableiten.

Weil sich der Fußgänger 130 der Fahrbahn von der Seite nähert, reduziert sich die messbare Geschwindigkeit auch durch den seitlichen Versatz zur Bewegungsrichtung der Radarvorrichtung 110, 115. Der Fußgänger 130 erfährt die gleiche Reduktion der scheinbaren Geschwindigkeit wie stehende Objekte 130 unter dem gleichen Beobachtungswinkel. Andererseits erhöht sich durch den größeren Beobachtungswinkel bei gleicher Bewegungsrichtung des Fußgängers 130 die Radialkomponente der eigentlichen Fußgängerbewegung.

### Mikrodoppler-Analyse

Für die eigentliche Analyse des Mikrodopplers eignen sich prinzipiell ähnliche Verfahren wie für stationäre RADAR-Systeme mit konstanter Sendefrequenz. Aufgrund der Verdeckung eines großen Teils der Mikrodoppler-Aufspreizung sind jedoch hauptsächlich die Stärke der Mikrodoppler-Leistung, die Breite der unverdeckten Aufspreizung, die Amplitude der Schwankung dieser Breite über die Zeit sowie der zeitliche Abstand/Periode zwischen zwei maximalen Aufspreizungen (und damit die gemessene Schrittfrequenz des Fußgängers 130) maßgeblich.

Zusätzlich sollte bei dieser Analyse beachtet werden, dass ein Fußgänger 130 per Definition einen stationären Teil (den stehenden Fuß) besitzt und dass das Leistungsmaximum durch den Torso gegeben ist. Entsprechend gibt es keine Lücke (ohne Signalleistung) zwischen der zur negativen Ego- Geschwindigkeit gehörenden Doppler-Frequenz und der Mikrodoppler-Aufspreizung des Fußgängers 130. Gegen die Klassifikation eines Objekts 130 als Fußgänger 130 spricht entsprechend auch, wenn das spektrale Maximum signifikant von dieser zur negativen Ego-Geschwindigkeit gehörenden Doppler-Frequenz entfernt ist.

## Patentansprüche

1. System (100) zur Abtastung eines Objekts (130) von einem Kraftfahrzeug aus, wobei das System (100) folgendes umfasst:
- eine erste Radarvorrichtung (110) zur Abtastung erster Informationen des Objekts (130), die eine Entfernung, einen ersten Objektwinkel (130) und eine erste Relativgeschwindigkeit umfassen, wobei die erste Radarvorrichtung (110) als Messprinzip das FMCW-Verfahren verwendet;
- eine weitere Radarvorrichtung in Form einer Dauerstrich-Radarvorrichtung (115) zur Abtastung zweiter Informationen des Objekts (130), die eine zweite Relativgeschwindigkeit und einen zweiten Objektwinkel (130) umfassen; und
- eine Verarbeitungseinrichtung (120) zur Zuordnung der ersten und zweiten Informationen bezüglich des selben Objekts (130),
- und zur Klassifikation des Objekts (130) auf der Basis einer Charakteristik der zweiten Relativgeschwindigkeit, wobei
- die Verarbeitungseinrichtung (120) dazu eingerichtet ist, eine Mikrodoppleranalyse der Signale der Dauerstrich-Radarvorrichtung (115) durchzuführen,
- die beiden Radarvorrichtungen (110, 115) abwechselnd betrieben werden,
- der Dauerstrichbetrieb länger als eine Frequenzrampe des FMCW-Betriebs ist,
- ein Differenzsignal zwischen dem ausgesandten und dem am Objekt (130) reflektierten Dauerstrich-Radarsignal bezüglich seiner Frequenzverteilung analysiert wird,
**dadurch gekennzeichnet, dass**
- ein zeitlicher Verlauf der Frequenzverteilung analysiert wird,
- nur solche Frequenzen betrachtet werden, die unterhalb einer vorbestimmten Grenzfrequenz liegen, die auf der Basis einer Geschwindigkeit der Radarvorrichtungen (110, 115) gegenüber einer Umgebung (125) bestimmt ist,
- die Analyse mittels Fourier-Transformation durchgeführt wird,
- nur Signalanteile betrachtet werden, die Objekten zugeordnet sind, die schneller auf die Radarvorrichtung zukommen als sich die Radarvorrichtung gegenüber der Umgebung bewegt, also Objekten, die sich selbst gegenüber der Umgebung bewegen, wobei die Dopplerfrequenz dieser Objekte entsprechend kleiner, d.h. betragsmäßig größer, als diejenige Dopplerfrequenz ist, die der negativen Eigengeschwindigkeit entspricht.

2. System (100) nach Anspruch 1, wobei die beiden Radarvorrichtungen (110, 115) in einer integriert sind, die nacheinander mit unterschiedlichen Signalen betrieben wird.

3. Verfahren (200) zum Abtasten eines Objekts (130) von einem Kraftfahrzeug aus, wobei das Verfahren folgende Schritte umfasst:
- Abtasten (205) erster Informationen des Objekts (130) mittels einer Radarabtastung durch eine erste Radarvorrichtung, wobei die ersten Informationen eine Entfernung, einen ersten Objektwinkel (130) und eine erste Relativgeschwindigkeit umfassen, wobei die Radarabtastung als Messprinzip das FMCW-Verfahren verwendet;
- Abtasten (210) zweiter Informationen des Objekts (130) mittels einer weiteren Radarvorrichtung in Form einer Dauerstrich-Radarabtastung, wobei die zweiten Informationen eine zweite Relativgeschwindigkeit und einen zweiten Objektwinkel (130) umfassen;
- Zuordnen (215) der ersten und zweiten Informationen bezüglich des selben Objekts (130); und
- Klassifizieren (215) des Objekts (130) auf der Basis einer Charakteristik der zweiten Relativgeschwindigkeit, wobei
- eine Mikrodoppleranalyse der Signale der Dauerstrich-Radarabtastung durchgeführt wird,
- die beiden Radarabtastungen abwechselnd betrieben werden,
- der Dauerstrichbetrieb länger als eine Frequenzrampe des FMCW-Betriebs ist,
- ein Differenzsignal zwischen dem ausgesandten und dem am Objekt (130) reflektierten Dauerstrich-Radarsignal bezüglich seiner Frequenzverteilung analysiert wird,
**dadurch gekennzeichnet, dass**
- ein zeitlicher Verlauf der Frequenzverteilung analysiert wird,
- nur solche Frequenzen betrachtet werden, die unterhalb einer vorbestimmten_Grenzfrequenz liegen, die auf der Basis einer Geschwindigkeit der Radarvorrichtungen (110, 115) gegenüber einer Umgebung (125) bestimmt ist,
- die Analyse mittels Fourier-Transformation durchgeführt wird,
- nur Signalanteile betrachtet werden, die Objekten zugeordnet sind, die schneller auf die Radarvorrichtung zukommen als sich die Radarvorrichtung gegenüber der Umgebung bewegt, also Objekten, die sich selbst gegenüber der Umgebung bewegen, wobei die Dopplerfrequenz dieser Objekte entsprechend kleiner, d.h. betragsmäßig größer, als diejenige Dopplerfrequenz ist, die der negativen Eigengeschwindigkeit entspricht.

## Claims

1. System (100) for scanning an object (130) from a motor vehicle, wherein the system (100) comprises the following:
- a first radar apparatus (110) for scanning first information relating to the object (130) and comprising a distance, a first object angle (130) and a first relative speed, wherein the first radar apparatus (110) uses the FMCW method as the measurement principle;
- a further radar apparatus in the form of a continuous-wave radar apparatus (115) for scanning second information relating to the object (130) and comprising a second relative speed and a second object angle (130); and
- a processing device (120) for assigning the first and second information relating to the same object (130),
- and for classifying the object (130) on the basis of a characteristic of the second relative speed, wherein
- the processing device (120) is configured to carry out a micro-Doppler analysis of the signals from the continuous-wave radar apparatus (115),
- the two radar apparatuses (110, 115) are operated in alternation,
- continuous-wave operation is longer than a frequency ramp of FMCW operation,
- a differential signal between the emitted continuous-wave radar signal and the continuous-wave radar signal reflected at the object (130) is analysed with respect to its frequency distribution, **characterized in that**
- a temporal profile of the frequency distribution is analysed,
- only those frequencies which are below a predetermined cut-off frequency determined on the basis of a speed of the radar apparatuses (110, 115) with respect to an environment (125) are considered,
- the analysis is carried out by means of a Fourier transform,
- only signal components which are assigned to objects that approach the radar apparatus more quickly than the radar apparatus moves with respect to the environment, that is to say objects which themselves move with respect to the environment, are considered, wherein the Doppler frequency of these objects is accordingly lower, that is to say greater in terms of absolute value, than that Doppler frequency which corresponds to the negative ego-speed.

2. System (100) according to Claim 1, wherein the two radar apparatuses (110, 115) are integrated in one apparatus which is operated with different signals in succession.

3. Method (200) for scanning an object (130) from a motor vehicle, wherein the method comprises the following steps of:
- a first radar apparatus scanning (205) first information relating to the object (130) by means of radar scanning, wherein the first information comprises a distance, a first object angle (130) and a first relative speed, wherein the radar scanning uses the FMCW method as the measurement principle;
- scanning (210) second information relating to the object (130) by means of a further radar apparatus in the form of continuous-wave radar scanning, wherein the second information comprises a second relative speed and a second object angle (130);
- assigning (215) the first and second information relating to the same object (130); and
- classifying (215) the object (130) on the basis of a second characteristic of the second relative speed, wherein
- a micro-Doppler analysis of the signals from the continuous-wave radar scanning is carried out,
- the two radar scanning processes are operated in alternation,
- continuous-wave operation is longer than a frequency ramp of FMCW operation,
- a differential signal between the emitted continuous-wave radar signal and the continuous-wave radar signal reflected at the object (130) is analysed with respect to its frequency distribution, **characterized in that**
- a temporal profile of the frequency distribution is analysed,
- only those frequencies which are below a predetermined cut-off frequency determined on the basis of a speed of the radar apparatuses (110, 115) with respect to an environment (125) are considered,
- the analysis is carried out by means of a Fourier transform,
- only signal components which are assigned to objects that approach the radar apparatus more quickly than the radar apparatus moves with respect to the environment, that is to say objects which themselves move with respect to the environment, are considered, wherein the Doppler frequency of these objects is accordingly lower, that is to say greater in terms of absolute value, than that Doppler frequency which corresponds to the negative ego-speed.

## Revendications

1. Système (100) permettant de balayer un objet (130) à partir d'un véhicule automobile, le système (100) comprenant :
- un premier dispositif radar (110) pour balayer des premières informations de l'objet (130) qui comprennent une distance, un premier angle d'objet et une première vitesse relative, le premier dispositif radar (110) utilisant le procédé FMCW comme principe de mesure ;
- un dispositif radar supplémentaire sous la forme d'un dispositif radar à ondes entretenues (115) pour balayer des deuxièmes informations de l'objet (130) qui comprennent une deuxième vitesse relative et un deuxième angle d'objet (130) ; et
- un moyen de traitement (120) pour affecter les premières et les deuxièmes informations concernant le même objet (130),
- et pour classifier l'objet (130) sur la base d'une caractéristique de la deuxième vitesse relative, dans lequel
- le moyen de traitement (120) est conçu pour effectuer une analyse de micro-Doppler des signaux du dispositif radar à ondes entretenues (115),
- les deux dispositifs radar (110, 115) fonctionnent en alternance,
- le fonctionnement à ondes entretenues dure plus longtemps qu'une rampe de fréquence du fonctionnement FMCW,
- un signal de différence entre le signal radar à ondes entretenues émis et celui réfléchi sur l'objet (130) est analysé quant à sa distribution de fréquence, **caractérisé en ce que**
- une courbe dans le temps de la distribution de fréquence est analysée,
- seules sont considérées les fréquences qui se situent au-dessous d'une fréquence limite prédéterminée qui est déterminée sur la base d'une vitesse des dispositifs radar (110, 115) par rapport à un environnement (125),
- l'analyse est effectuée au moyen d'une transformation de Fourier,
- seules sont considérées les fractions de signal qui sont affectées à des objets qui s'approchent plus rapidement du dispositif radar que le dispositif radar ne se déplace par rapport à l'environnement, donc des objets qui se déplacent eux-mêmes par rapport à l'environnement, dans lequel la fréquence Doppler de ces objets est de façon correspondante inférieure, c'est-à-dire de valeur supérieure, à la fréquence Doppler qui correspond à la vitesse propre négative.

2. Système (100) selon la revendication 1, dans lequel les deux dispositifs radar (110, 115) sont intégrés en un et fonctionnent successivement avec différents signaux.

3. Procédé (200) permettant de balayer un objet (130) à partir d'un véhicule automobile, le procédé comprenant les étapes suivantes consistant à :
- balayer (205) des premières informations de l'objet (130) au moyen d'un balayage radar par un premier dispositif radar, dans lequel les premières informations comprennent une distance, un premier angle d'objet (130) et une première vitesse relative, le balayage radar utilisant le procédé FMCW comme principe de mesure ;
- balayer (210) des deuxièmes informations de l'objet (130) au moyen d'un dispositif radar supplémentaire sous la forme d'un balayage radar à ondes entretenues, dans lequel les deuxièmes informations comprennent une deuxième vitesse relative et un deuxième angle d'objet (130) ;
- affecter (214) les premières et les deuxièmes informations concernant le même objet (130) ; et
- classifier (215) l'objet (130) sur la base d'une caractéristique de la deuxième vitesse relative,
dans lequel
- une analyse de micro-Doppler des signaux du balayage radar à ondes entretenues est effectuée,
- les deux balayages radar fonctionnent en alternance,
- le fonctionnement à ondes entretenues dure plus longtemps qu'une rampe de fréquence du fonctionnement FMCW,
- un signal de différence entre le signal radar à ondes entretenues émis et celui réfléchi sur l'objet (130) est analysé quant à sa distribution de fréquence, **caractérisé en ce que**
- une courbe dans le temps de la distribution de fréquence est analysée,
- seules sont considérées les fréquences qui se situent au-dessous d'une fréquence limite prédéterminée qui est déterminée sur la base d'une vitesse des dispositifs radar (110, 115) par rapport à un environnement (125),
- l'analyse est effectuée au moyen d'une transformation de Fourier,
- seules sont considérées les fractions de signal qui sont affectées à des objets qui s'approchent plus rapidement du dispositif radar que le dispositif radar ne se déplace par rapport à l'environnement, donc des objets qui se déplacent eux-mêmes par rapport à l'environnement, dans lequel la fréquence Doppler de ces objets est de façon correspondante inférieure, c'est-à-dire de valeur supérieure, à la fréquence Doppler qui correspond à la vitesse propre négative.
